## Europäisches Patentamt
## European Patent Office
## Office européen des brevets

(19)

(11) Numéro de publication: **0 139 589**
**B1**

(12)

# FASCICULE DE BREVET EUROPEEN

(45) Date de publication du fascicule du brevet:
**01.04.87**

(51) Int. Cl.⁴: **B 65 B 51/14**

(21) Numéro de dépôt: **84402061.0**

(22) Date de dépôt: **12.10.84**

(54) Machine à emballer des articles quelconques sous film en matière plastique.

(30) Priorité: **19.10.83 FR 8316657**

(43) Date de publication de la demande:
**02.05.85 Bulletin 85/18**

(45) Mention de la délivrance du brevet:
**01.04.87 Bulletin 87/14**

(84) Etats contractants désignés:
**BE CH DE GB IT LI NL**

(56) Documents cités:
**US - A - 3 461 271**

(73) Titulaire: **Pack, Junior, 1 à 3 rue Edouard Vasseur,
F-94200 Ivry s/Seine (FR)**

(72) Inventeur: **Chailloux, Philippe Henri, 8 rue du Muguet,
F-91540 Mennecy (FR)**

(74) Mandataire: **Durand, Yves Armand Louis et al, Cabinet Z.
Weinstein 20, Avenue de Friedland, F-75008 Paris (FR)**

ACTORUM AG

## Description

La présente invention a pour objet une machine perfectionnée pour emballer des articles sous film en matière plastique thermorétractable.

Il existe déjà des machines à emballer selon le préambule de la revendication 1, comprenant un bâti sur lequel est monté un cadre permettant le soudage du pourtour d'une feuille en matière plastique dans laquelle a été préalablement placé l'article à emballer.

Comme décrit dans la partie introductive (colonne 1, lignes 43-47) du document US-A-3.461.271, l'abaissement du cadre en direction de la feuille était réalisé par des moyens tels que des vérins hydrauliques ou pneumatiques exerçant une forte possée sur le cadre. De tels moyens sont compliqués, augmentent le coût de la machine et constituent en outre un risque de blessure pour l'utilisateur de la machine, notamment dans le cas où il mettrait sa main entre le cadre et le bâti de la machine.

Aussi, la présente invention a notamment pour but de remédier aux inconvénients ci-dessus en proposant une machine perfectionnée à emballer des articles quelconques sous film thermorétractable, laquelle machine procure la forte poussée requise sur le cadre de soudage à l'aide de moyens simples et fiables situés à l'avant du cadre et du bâti de la machine, ces moyens permettant une soudure parfaite du film plastique et cela sans aucune fatigue pour l'opérateur, ni aucune gêne pour l'entraînement du film plastique sur le devant de la machine.

A cet effet, l'invention a pour objet une machine à emballer des articles sous film en matière plastique et du type comprenant un bâti sur lequel est monté un cadre apte à effectuer le soudage d'au moins une partie du pourtour d'une feuille en matière plastique contenant l'article à emballer, le bâti étant pourvu de moyens d'actionnement pour abaisser le cadre de la position ouverte à la position fermée en direction de ladite feuille, caractérisée en ce qu'elle comprend un moyen de traction pour presser le cadre contre la feuille, ce moyen de traction étant monté déplaçable verticalement sur la partie avant du bâti de la machine et étant associé aux moyens d'actionnement du cadre pour presser celui-ci fortement contre la feuille après que ledit cadre soit appliqué sur la feuille par les moyens d'actionnement.

Suivant une autre caractéristique de l'invention, le moyen de traction précité est constitué par au moins un électro-aimant avec armature et culasse, l'un de ces deux éléments étant solidaire du cadre, et l'autre étant relié à un moyen d'entraînement.

On comprend déjà que, lorsque le cadre sera en position sur la feuille plastique à souder, on pourra déplacer l'ensemble de l'électro-aimant vers le bas, ce qui provoquera une traction sur l'avant du cadre qui sera ainsi convenablement pressé sur la feuille afin d'effectuer un soudage parfait.

En outre, l'électro-aimant ne gênera pas la feuille sur le devant de la machine, puisque ladite feuille s'interposera entre la culasse et l'armature de l'électro-aimant sans effectuer le fonctionnement de celui-ci et sans gêner l'opération de soudage.

Selon une autre caractéristique de l'invention, le moyen d'entraînement précité est constitué par l'une des extrémités d'un bras formant levier articulé sur le bâti de la machine.

Suivant une autre caractéristique, l'autre extrémité du bras précité porte un galet et est commandée par une came solidaire d'un arbre de commande des moyens d'actionnement.

On précisera encore ici que, sur l'arbre précité, est calée une autre came sur laquelle porte un deuxième galet attelé à un système de bielles de commande du cadre.

Ce système de bielles est, suivant une réalisation préférée, constitué par une première biellette dont une extrémité porte le deuxième galet précité et est articulée à une deuxième biellette elle-même articulée au cadre, et dont l'autre extrémité est articulée sur le bâti de la machine.

Suivant encore une autre caractéristique de l'invention, l'arbre et les deux cames précitées sont actionnés par un groupe moto-réducteur à l'arrière du bâti de la machine.

Suivant encore une autre caractéristique de la machine conforme à l'invention, le bras formant levier est solidaire de la culasse de l'électro-aimant par l'intermédiaire d'une patte ou analogue, tandis que l'armature de cet électro-aimant est solidaire de l'avant du cadre par l'intermédiaire d'une rotule.

Mais d'autres caractéristiques et avantages de l'invention apparaîtront mieux dans la description détaillée qui suit et se réfère aux dessins annexés, donnés uniquement à titre d'exemple, et dans lesquels:

la figure 1 est une vue schématique en perspective d'une machine équipée des perfectionnements selon l'invention;

la figure 2 est une vue partielle en perspective des moyens d'actionnement du cadre de soudage ainsi que du bras de commande de l'électro-aimant, et

la figure 3 est une vue partielle de côté de la partie avant du bâti de la machine et montrant à plus grande échelle l'électro-aimant, suivant la flèche III de la figure 1.

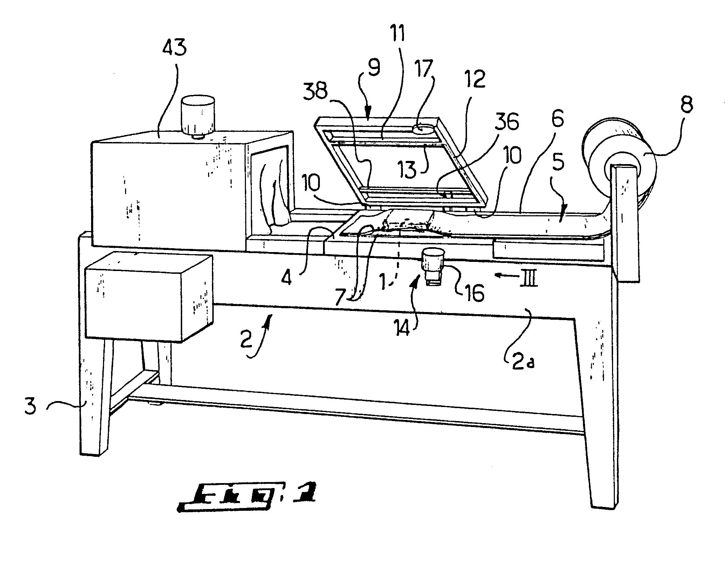

En se reportant notamment à la figure 1, on voit une machine à emballer des articles quelconques 1 sous film plastique thermorétractable, cette machine comprenant essentiellement un bâti 2 supporté par des pieds 3 et dont la partie supérieure comporte un plateau 4 sur lequel peut glisser une feuille 5 en matière plastique, ladite feuille comportant un bord replié 6 et, de l'autre côté, deux bords 7 entre lesquels on peut insérer l'article à emballer 1.

La feuille 5 est enroulée sur un dévidoir 8 monté à l'une des extrémités du bâti 2 de la machine.

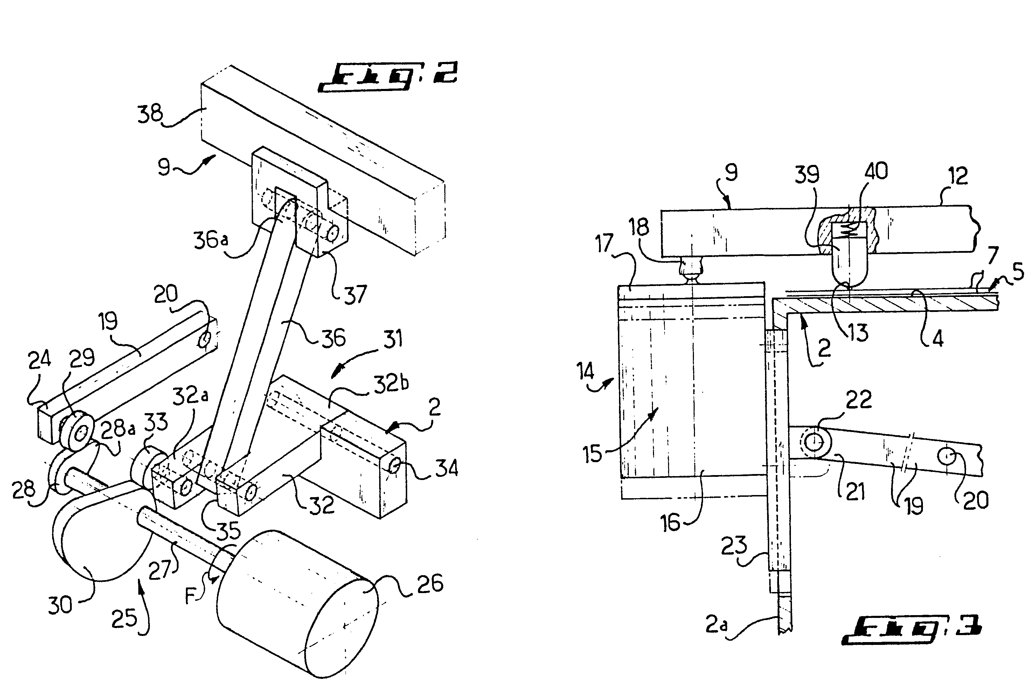

A l'arrière de ce bâti, est articulé en 10 un cadre 9 formant une partie en L 11, 12 contenant une résistance électrique chauffante montée en 13 sur les figures 1 et 3. A l'autre extrémité du bâti 2, est prévu un four tunnel 43 assurant la rétraction de la matière plastique après que l'article 1 ait été emballé grâce à l'action du cadre de soudage 9.

A ce propos, on notera que l'emballage de l'article 1 est effectué par la partie 12 du cadre 9 qui effectue une soudure transversale des deux demi-feuilles formant la feuille plastique 5, et également par la partie 11 du cadre 9 qui soude les deux bords longitudinaux 7 de la feuille 5. Bien entendu, la soudure sera effectuée par application et pression du cadre 9 sur le plateau 4 du bâti 2 de la machine.

Toutes les dispositions ci-dessus se retrouvent sur la plupart des machines connues à ce jour, mais qui, comme expliqué au début de cette description n'utilisent pas des moyens simples, fiables et sans danger pour exercer une forte poussée sur le cadre de soudage 9.

Conformément à l'invention, et en se reportant plus particulièrement aux figures 2 et 3, un appareil 14 permettant d'effectuer une traction sur le cadre 9 lorsqu'il est en position abaissée, comme on le voit sur la figure 3, est monté de manière déplaçable sur la partie avant 2a du bâti 2. Cet appareil est constitué par un électro-aimant 15 dont la culasse 16 est montée de manière déplaçable sur le bâti 2, et dont l'armature 17 est solidaire du cadre 9 par l'intermédiaire d'une rotule 18 par exemple. Bien entendu, on pourrait parfaitement, sans sortir du cadre de l'invention, prévoir une disposition inverse, c'est-à-dire une armature montée déplaçable sur le bâti 2, et une culasse 16 montée sur le cadre 9.

La culasse 16 de l'électro-aimant 15 peut être actionnée verticalement par un moyen quelconque, tel que par exemple un vérin ou même un électro-aimant à noyau plongeur. Mais suivant l'exemple représenté, la commande du déplacement de la culasse 16 est réalisée par un bras 19 formant levier articulé en 20 sur le bâti 2 de la machine. Plus précisément, une extrémité 21 du bras 19 est articulée en 22 sur une plaque, patte ou analogue 23 solidaire de la culasse 16, comme on le voit bien sur la figure 3.

En se reportant à la figure 2, on voit que l'autre extrémité 24 du bras 19 est associée à des moyens 25 d'actionnement du cadre 9, lesquels moyens sont montés sur l'arrière du bâti 2 de la machine et seront maintenant décrits en détail.

Un groupe moto-réducteur représenté schématiquement en 26 entraîne un arbre 27 sur lequel sont calées une came 28 coopérant avec un galet 29 solidaire de l'extrémité 24 su bras ou levier 19, et une autre came 30 destinée à commander un système de bielles 31 assurant la commande du cadre 9.

Le système de bielles 31 comprend une première biellette 32 dont une extrémité 32a porte un galet 33 coopérant avec la came 30, et dont l'autre extrémité 32b est articulée sur le bâti 2 de la machine, comme on l'a montré schématiquement en 34.

L'extrémité 32a de la biellette 32 forme par exemple une chape 35 dans laquelle est articulée une deuxième biellette 36 dont l'extrémité 36a est articulée sur le cadre 9 de préférence par l'intermédiaire d'un support approprié 37. Plus précisément, l'extrémité 36a de la biellette 36 est articulée sur une barre 38 solidaire du cadre de soudage 9. On ne décrira pas ici tous les autres moyens que peut comprendre la machine, tels que par exemple le support spécial 39 de la résistance chauffante 13, lequel support est solidaire du cadre 9 et peut être soumis à l'action d'un ressort 40, comme cela est visible sur la figure 3.

La raison en est que tous ces moyens sont connus en soi.

On expliquera maintenant le fonctionnement de la machine ci-dessus, et principalement celui des perfectionnements objet de la présente invention.

L'arbre 27 étant entraîné par le moto-réducteur 26 et tournant suivant la flèche F visible sur la figure 2, la came 30 actionnera le système de biellettes 31 pour faire basculer le cadre 9 jusqu'à ce qu'il s'applique sur le plateau 4 pour souder la feuille 5 comme expliqué précédemment. Dans cette position, la came 28, ou plus précisément l'extrémité 28a de cette came fera basculer le levier 19, de sorte que, comme on le comprend en se reportant à la figure 3, une traction vers le bas sera imprimée à l'électro-aimant 15, ce qui finalement provoquera une pression forte, et sans effort manuel, du cadre 9 et de sa résistance chauffante associée 13 sur le film 5. En bref une simple traction sur l'électro-aimant suffira pour obtenir la forte pression nécessaire lors du soudage. Cette traction sur la culasse de l'électro-aimant ou encore cette pression du cadre 9 sur la feuille 5 et le plateau 4 sera exercée pendant le temps nécessaire, ce après quoi l'alimentation de l'électro-aimant 15 sera automatiquement coupée pour déssolidariser ladite culasse de l'armature 17.

On comprend que l'électro-aimant 15 ne gênera pas le défilement de la feuille 5 qui s'interposera entre l'armature 17 et la culasse 16, de sorte que le soudage ne sera pas perturbé. En outre, la machine de l'invention présente toutes les sécurités voulues pour l'opérateur qui ne risquera pas de se blesser dans le cas où il placerait par inadvertance sa main entre le cadre 9 et le plateau 4. En effet, la main de l'opérateur ne supportera que le propre poids du cadre qui peut être facilement soulevé, puisque les biellettes 32, 36 échapperont à la came 30 lors de ce soulèvement. C'est dire que la main de l'opérateur n'aura pas à subir la forte poussée positive venant de l'arrière du bâti de la machine, comme c'était le cas dans les machines antérieures.

Enfin, le cadre 9 ainsi que les moyens qui le commandent constituent une structure notablement allégée par rapport aux machines actuellement connues.

On a donc réalisé suivant l'invention une machine à emballer des articles quelconques sous film plastique thermorétractable, qui est d'une conception mécanique particulièrement simple et fiable, et qui présente de nombreux avantages tant sur le plan du coût que sur celui de la sécurité et de l'exécution de la soudure.

Bien entendu, l'invention n'est nullement limitée au mode de réalisation décrit et illustré qui n'a été donné qu'à titre d'exemple.

C'est ainsi qu'on peut prévoir n'importe quel moyen approprié pour exercer une traction sur l'électro-aimant, ce moyen pouvant être dépendant ou indépendant des moyens 25 d'actionnement proprement dit du cadre.

C'est dire que l'invention comprend tous les équivalents techniques des moyens décrits ainsi que leurs combinaisons si celles-ci sont effectuées dans le cadre des revendications.

## Revendications

1. Machine à emballer des articles (1) sous film en matière plastique (5) et du type comprenant un bâti (2) sur lequel est monté un cadre (9) apte à effectuer le soudage d'au moins une partie du pourtour d'une feuille en matière plastique contenant l'article à emballer, le bâti étant pourvu de moyens d'actionnement (25) pour abaisser le cadre de la position ouverte à la position fermée en direction de ladite feuille, caractérisée en ce qu'elle comprend un moyen de traction (14) pour presser le cadre (9) contre la feuille, ce moyen de traction (14) étant monté déplaçable verticalement sur la partie avant (2a) du bâti (2) de la machine et étant associé aux moyens d'actionnement (25) du cadre pour presser celui-ci fortement contre la feuille (5) après que ledit cadre soit appliqué sur la feuille par les moyens d'actionnement.

2. Machine selon la revendication 1, caractérisée en ce que le moyen de traction précité (14) est constitué par au moins un électro-aimant (15) avec armature (17) et culasse (16), l'un de ces deux éléments étant solidaire du cadre (9), et l'autre étant relié à un moyen d'entraînement.

3. Machine selon la revendication 2, caractérisée en ce que le moyen d'entraînement précité est constitué par l'une (21) des extrémités (21, 24) d'un bras formant levier (19) articulé sur le bâti (2) de la machine.

4. Machine selon la revendication 3, caractérisée en ce que l'autre extrémité (24) du bras précité porte un galet (29), et est commandée par une came (28) solidaire d'un arbre (27) de commande des moyens d'actionnement (25).

5. Machine selon la revendication 4, caractérisée en ce que sur l'arbre précité (27), est calée une autre came (30) sur laquelle porte un deuxième galet (33) attelé à un système de bielles (31) de commande du cadre (9).

6. Machine selon la revendication 5, caractérisée en ce que le système de bielles (31) précité est constitué par une première biellette (32) dont une extrémité (32a) porte le deuxième galet (33) et est articulée à une deuxième biellette (36) elle-même articulée au cadre (9), et dont l'autre extrémité (32b) est articulée sur le bâti (2) de la machine.

7. Machine selon la revendication 5, caractérisée en ce que l'arbre (27) et les deux cames précitées (28, 30) sont actionnés par un groupe moto-réducteur (26) à l'arrière du bâti (2).

8. Machine selon l'une des revendications 3 à 4, caractérisée en ce que le bras formant levier (19) est solidaire de la culasse (16) de l'électro-aimant par l'intermédiaire d'une patte (23).

9. Machine selon la revendication 2 ou 8, caractérisée en ce que l'armature (17) de l'électro-aimant (15) est solidaire du cadre (9) par l'intermédiaire d'une rotule (18).

## Patentansprüche

1. Maschine zur Verpackung von Artikeln (1) unter Kunststoffolien (5) und der Art, die ein Gestell (2) besitzt, worauf ein dazu geeigneter Rahmen (9) angebracht ist, wenigstens einen Teil des Umfangs einer den zu verpackenden Artikel enthaltenden Kunststoffolie zu schweissen, wobei das Gestell mit Betätigungsmitteln (25) zur Absenkung des Rahmens von der offenen in die geschlossene Stellung in Richtung auf die besagte Folien versehen ist, dadurch gekennzeichnet, dass sie ein Zugmittel (14) zum Andrücken des Rahmens gegen die Folie umfasst, wobei dieses Zugmittel (14) senkrecht verschiebbar auf dem Vorderteil (2a) des Maschinengestells (2) aufgebaut und mit den Betätigungsmitteln (25) des Rahmens (2) verbunden ist, um diesen kräftig gegen die Folie (5) anzudrücken, nachdem der besagte Rahmen durch die Betätigungsmittel angelegt worden ist.

2. Maschine nach Anspruch 1, dadurch gekennzeichnet, dass das vorgenannte Zugmittel (14) wenigstens aus einem Elektromagnet (15) mit einem Magnetanker (17) und einem Joch (16) besteht, wobei eines dieser Glieder mit dem Rahmen (9) bzw. das andere mit einem Mitnahmemittel verbunden ist.

3. Maschine nach Anspruch 2, dadurch gekennzeichnet, dass das Mitnahmemittel aus einem (21) der Enden (21, 24) eines einen Hebel (19) bildenden Armes besteht, der auf dem Maschinengestell (2) gelenkig angebracht ist.

4. Maschine nach Anspruch 3, dadurch gekennzeichnet, dass das andere Ende (24) des vorgenannten Armes eine Reibrolle (29) trägt und von einer mit einer Steuerwelle (27) zum Antrieb der Betätigungsmittel (25) verbundenen Nockenscheibe (28) gesteuert wird.

5. Maschine nach Anspruch 4, dadurch gekennzeichnet, dass auf der vorgenannten Welle (27) eine weitere Welle (30) fest gekeilt ist, auf welcher eine zweite Reibrolle (33) ruht, die an einem Pleuelstangensystem (31) zur Steuerung des Rahmens (9) gekuppelt ist.

6. Maschine nach Anspruch 5, dadurch gekennzeichnet, dass das vorgenannte Pleuelstangensystem (31) aus einer ersten Anlenkpleuelstange (32) besteht, dessen ein Ende (33a) die zweite Reibrolle (33) trägt und an einer zweiten Anlenkpleuelstange (36) angelenkt ist, die wiederum auf dem Gestell (2) der Maschine gelenkig angebracht ist.

7. Maschine nach Anspruch 5, dadurch gekennzeichnet, dass die Welle (27) und die zwei vorgenannten Nockenscheiben (28, 30) von einem am Hinterteil des Gestells (2) befindlichen Getriebemotoraggregat (26) angetrieben werden.

8. Maschine nach einem der Ansprüche 3 und 4, dadurch gekennzeichnet, dass der einen Hebel (19) bildende Arm über einen Schenkel (23) mit dem Joch (16) des Elektromagnets verbunden ist.

9. Maschine nach Anspruch 2 oder 8, dadurch gekennzeichnet, dass das Joch (17) des Elektromagnets (15) über ein Kugelgelenk (18) mit dem Rahmen (9) verbunden ist.

## Claims

1. A machine for wrapping goods (1) under a plastic film (5) and of the kind comprising a rest (2) on which is installed a frame (9) suitable for welding at least a portion of the periphery of a plastic sheet enclosing the goods to be wrapped, the rest being provided with operating means (25) to lower the frame from the open to the closed position towards the said sheet, characterized in that it comprises a pulling means (14) to press the frame (9) against the sheet, this pulling means being mounted vertically movable on the front part (2a) of the machine rest (2) and being associated with the operating means (25) of the frame in order to strongly press the latter onto the sheet (5) by the operating means.

2. A machine according to claim 1, characterized in that the aforesaid pulling means (14) consists of at least one electromagnet (15) with an armature (17) and a yoke (16), one of both these elements being solid with the frame (9) and the other being connected to a control means.

3. A machine according to claim 2, characterized in that the aforesaid control means is constituted by one (21) of the ends (21, 24) of an arm forming a lever (19) hinged on the rest (2) of the machine.

4. A machine according to claim 3, characterized in that the other end (24) of the aforesaid arm bears a roller (29) and is controlled by a cam (28) solid with a shaft (27) driving the operating means (25).

5. Machine according to claim 4, characterized in that on the aforesaid shaft (27) is wedged another cam (30) on which rests a second roller (33) coupled to a connecting rod system (31) controlling the frame (9).

6. A machine according to claim 5, characterized in that the aforesaid connecting rod system (31) is made up of one first link connection rod (32), one end (32a) of which bears the second roller (33) and is hinged with a second link connection rod (36) hinged in turn to the frame (9) and whose other end (32b) is hinged on the rest (2) of the machine.

7. Machine according to claim 5, characterized in that the shaft (27) and both the aforesaid cams (28, 30) are driven by a back-geared motor set (26) at the back of the rest (2).

8. A machine according to claims 3 and 4, characterized in that the arm forming a lever (19) is solid with the yoke (16) of the electromagnet through a leg (23).

9. A machine according to claim 2 or 8, characterized in that the armature (17) of the elctromagnet (15) is solid with the frame (9) through a ball and socket joint (18).

Fig. 1

Fig. 2

Fig. 3

0 139 589